## Europäisches Patentamt

## European Patent Office

## Office européen des brevets

(11) Veröffentlichungsnummer: **0 217 188**
**B1**

(12) # EUROPÄISCHE PATENTSCHRIFT

(45) Veröffentlichungstag der Patentschrift:
26.07.89

(51) Int. Cl.⁴: **B 23 H 1/02,** B 23 H 7/22

(21) Anmeldenummer: 86112511.0

(22) Anmeldetag: 10.09.86

(54) Funkenerosionsverfahren und funkenerosionsmaschine zur Durchführung des Verfahrens.

(30) Priorität: 16.09.85 DE 3533002

(43) Veröffentlichungstag der Anmeldung:
08.04.87 Patentblatt 87/15

(45) Bekanntmachung des Hinweises auf die Patenterteilung:
26.07.89 Patentblatt 89/30

(84) Benannte Vertragsstaaten:
CH DE FR GB IT LI LU SE

(56) Entgegenhaltungen:
EP-A- 0 093 026
DD-A- 115 444
US-A- 4 029 929
US-A- 4 250 371

TECHNISCHE RUNDSCHAU, Nr.29, 1985,
Hellwag-Verlag, Bern, Schweiz
PATENT ABSTRACTS OF JAPAN, unexamined
applications, M Sektion, Vol.2, Nr. 63,13. Mai 1978 THE
PATENT OFFICE JAPANESE GOVERNMENT Seite 1033
M78
SOVIET INVENTIONS ILLUSTRATED, Sektion P,Q,
Woche E 34, 6. Oktober 1982 DERWENT PUBLICATIONS
LTD. London, R 57

(73) Patentinhaber: AG für industrielle Elektronik AGIE
Losone bei Locarno, CH-6616 Losone/Locarno (CH)

(72) Erfinder: Bühler, Ernst, Salita degli Orti 5,
CH-6616 Losone (CH)

(74) Vertreter: EGLI-EUROPEAN PATENT ATTORNEYS,
Widenmayerstrasse 5, D-8000 München 22 (DE)

(56) Entgegenhaltungen: (Fortsetzung)
TECHNISCHE RUNDSCHAU, Nr.29, 1985,
Hellwag-Verlag, Bern, Schweiz
PATENT ABSTRACTS OF JAPAN, unexamined
applications, M Sektion, Vol.2, Nr. 63,13. Mai 1978 THE
PATENT OFFICE JAPANESE GOVERNMENT Seite 1033
M78

## Beschreibung

Die Erfindung betrifft ein Funkenerosionsverfahren gemäß dem Oberbegriff des Patentanspruches 1 und eine Funkenerosionsmaschine gemäß dem Oberbegriff des Patentanspruches 8.

Verfahren und Vorrichtung dieser Art sind aus der Zeitschrift: «Technische Rundschau, Nr. 29, 1985, Hallwag-Verlag, Bern, Schweiz, S. 11» bekannt, wo eine in der Pinole einer Senkerodiermaschine eingespannte Elektrode elektroerosiv bearbeitet und damit hinsichtlich Länge und/oder Durchmesser kalibriert wird. Auf dem Maschinentisch ist dabei eine Gegenelektrode befestigt. Nach dem Kalibrieren wird die Elektrode dann zum Senkbearbeiten von Werkstücken verwendet, welche ebenfalls auf dem Maschinentisch aufgespannt sind. Weiterhin wird dort der Einsatz eines Werkzeugelektrodenwechslers und/oder eines Werkstückpalettensystems mit einem vollständigen Spannsystem vorgeschlagen. Auch wird darauf hingewiesen, daß das Ausrichten eines Werkstückes auf dem Tisch sehr schwierig ist und daß es vorteilhaft sein kann, mit mechanischen oder elektronischen Tastern, die beispielsweise Messungselektroden im Werkzeugwechsler sind, die genaue Lage des Werkstückes zu vermessen.

Aus Soviet-Inventions Illustrated, Section P, Q, Woche E 34, 06.10.1982, SU-874 297 bzw. aus der US-A-4 250 371 ist es bekannt, beim Schneiderodieren das Werstück in bezug auf eine Hauptarbeitsebene stillstehen zu lassen und die Drahtelektrode in der Hauptarbeitsebene zu verschieben, wobei die Drahtelektrode dabei auch gegenüber der Hauptarbeitsebene gekippt sein kann.

Aus der DE-AS 1 954 180 ist es bekannt eine Senkelektrode vor oder während der Bearbeitung eines Werkstückes mittels einer Drahtelektrode dadurch auf ihren korrekten Durchmesser zu bringen daß die Drahtelektrode die sich um ihre Längsachse drehende Senkelektrode elektroerosiv bearbeitet.

Aus dem Aufsatz «Praxis des funkenerosiven Schneidens mit Drahtelektrode» von H. Kies aus VDI-Berichte Nr. 241, 1975, S. 61 bis 68 ist ebenfalls bekannt, daß verschiedene Werkzeugelektroden funkenerosiv geschnitten werden können.

Die DE-PS 115 444 zeigt eine funkenerosive Drahtschneidemaschine, bei der der Draht zwischen zwei Bügeln eingespannt ist, wobei diese Bügel um zwei Achsen geschwenkt werden können.

In dem Aufsatz «Elektrodenherstellung und Positionierung mit fortschrittlichen Spannsystemen» von R. Brüne aus VDI-Berichte Nr. 241, 1975, S. 33 bis 36 ist beschrieben, daß man einen Formteilrohling für eine Senkelektrode auf einem fertig käuflichen Schaft anlöten, ankleben oder anschrauben kann.

Die CH-PS 566 186 beschreibt allgemein das Spannen von zu bearbeitenden Gegenständen mittels Löten oder Einfrieren von Wasser. Gleiches ist auch in der US-PS 3 790 152 und der DE-PS 852 642 beschrieben.

Die DE-OS 2 816 588 zeigt die Anordnung einer elektroerosiven Drathschneidevorrichtung an der Pinole (C-Achse) einer Senkerosionsmaschine.

In dem Aufsatz «3D-Meßtechnologie in der betrieblichen Praxis» von Rainer Seitz aus Technische Rundschau 21/85, S. 26 bis 33 ist eine Meßmaschine bekannt, bei der ein Meßtaster an einer Meßpinole angebracht ist.

Die DE-OS 3 326 416 beschreibt einen automatischen Werkzeugwechsler einer funkenerosiven Senkmaschine.

Aus der DE-OS 3 209 136 ist es bekannt, beim funkenerosiven Schneiden die anfallenden Ausfallstücke mittels Magnetkraft zu halten.

Die US-PS 3 711 676 zeigt eine Senkelektrode mit längs ihrer Achse laufender Spülbohrung, wobei diese Spülbohrung, auch durch den Elektrodenhalter läuft.

Elektrodenwechsler für Senkerosionsmaschinen wurden auf der EMO-Werkzeugmaschinenausstellung 1981 in Hannover von der schwedischen Firma 3R vorgeführt. Dabei wurde auch gezeigt, daß man komplizierte Senkelektroden in mehrere Teilelektroden aufgliedern kann.

In der japanischen Offenlegungsschrift 53-24200/74 ist eine Drahtschneidemaschine beschrieben, welche die beim Schneiderodieren entstehenden Ausfallstücke für ein konisches Ausweiten durch Planetärerosion weiter verwendet. Das Ausfallstück dient dabei als Senkelektrode.

Weiterhin ist es bekannt, Drahtschneidevorrichtungen auf der Pinole einer Senkerosionsmaschine anzubringen. Ein Beispiel hierfür findet sich in der Zeitschrift: «EDM-Digest, Januar/Februar 1985, S. 13 in einer Anzeige der Firma EDM Technology, New York, USA». Die Aufteilung der Elektroden nach dem erwähnten 3R-System stellt im Prinzip sehr hohe Anforderungen an die Elektrodenfertigung und wird daher nur in Spezialfällen angewendet. Die Idee der japanischen Offenlegungsschrift ist darauf beschränkt, eine an die exakte Form der zuvor ausgeschnittenen Öffnung im Werkstück angepaßte Senkelektrode zu erzeugen. Zur generellen Herstellung komplizierter Senkelektroden läßt sich diese Maschine nicht verwenden.

Ansonsten ist es durchaus gängig, Senkelektroden auf einer anderen Erodiermaschine zu bearbeiten, wo sie Werkstück sind und sie dann nach ihrer Fertigstellung als «Elektrode» auf einer anderen Maschine als Senkelektrode einzusetzen. Dies hat unter anderem den Nachteil, daß der Fertigungsablauf (von der [Roh-] Elektrode bis zum fertig bearbeiteten Werkstück) nicht automatisiert werden kann. Es handelt sich daher in der Praxis auch um reine Hilfsverfahren, die entsprechend selten angewandt werden.

Aufgabe der Erfindung ist es, das Verfahren und die Elektroerosionsmaschine der eingangs genannten Art dahingehend zu verbessern, daß der Erosionsprozeß für Raumformen weiter automatisiert werden kann, wobei möglichst die Genauigkeit der Bearbeitung und das Arbeitsresultat verbessert werden.

Die Aufgabe wird bei einem gattungsgemäßen Verfahren durch die im kennzeichnenden Teil der Patentansprüche 1 und bei der Vorrichtung durch die im Anspruch 8 angegebenen Merkmale gelöst.

Der wesentliche Vorteil der Erfindung besteht darin, daß ausgehend von dem Rohmaterial für die Elektrode(n) und das Werkstück bis hin zum vollständig bearbeiteten Werkstück alle Vorgänge auf einer Maschine durchgeführt werden können. Dieser gesamte Vorgang kann voll automatisiert werden, so daß auch ein unbewachter 24-Stunden-Betrieb mit einer Senkmaschine möglich wird. Weiterhin muß zwischen der Elektrodenfertigung und dem Senkprozeß keine Umspannung mehr erfolgen. Eine manuelle oder sogar spanabhebende Elektrodenfertigung entfällt.

Insgesamt läßt sich der Aufgabenbereich einer Maschine nach der Erfindung erheblich erweitern. Sie kann — obwohl sie nur geringfügig aufwendiger ist als eine herkömmliche Senkmaschine — die Arbeit von zwei oder sogar drei NC-gesteuerten Werkzeugmaschinen verrichten. Auch wird der Elektrodenmaterialverbrauch drastisch reduziert.

Die automatische Steuerung übernimmt nach entsprechender Programmierung sämtliche Aufgaben von der Elektrodenfertigung bis zum Bearbeiten des Werkstückes. Durch nur einmalig zu erstellende Dienstprogramme können alle Routinearbeiten wie Elektrodenaufteilung, Elektrodenuntermaßberechnung, Elektrodenbearbeitungsprogrammerstellung, Bearbeitungsparameterwahl und Werkstückvermessung und -ausrüstung dem Computer übergeben werden.

Mit dem bei der Erfindung verwendeten Spannsystem kann ein höchst genaues Ausrichten der wechselseitigen Lage von jeweiliger Elektrode und Werstück erreicht werden, wobei die bei herkömmlichen, mechanisch bestätigten Spannbacken auftretenden Spannfehler vollständig vermieden werden. Die von der Maschine angefahrene Position beim Aufspannen ist ja exakt bekannt und spätere Verschiebungen zwischen Spanneinrichtung und aufgespanntem Werkstück bzw. aufgespannter Elektrode können nicht mehr auftreten. Weitere vorteilhafte Ausgestaltungen und Weiterbildungen der Erfindung sind den Unteransprüchen zu entnehmen.

Im folgenden wird die Erfindung anhand von Ausführungsbeispielen im Zusammenhang mit der Zeichnung ausführlicher erläutert.

Es zeigt:

Fig. 1 eine Prinzipskizze des Aufbaues einer Elektroerosionsmaschine nach der Erfindung;

Fig. 2a bis 2c Beispiele von Spanndornen;

Fig. 3a bis 3c Beispiele von Roh-Senkelektroden in Bandform;

Fig. 4a bis 4b Beispiele von Stapelmagazinen;

Fig. 5 Beispiele eines Werkstückes mit Spannflächen; und

Fig. 6 ein Beispiel eines magnetisch erfaßten Werkstückes.

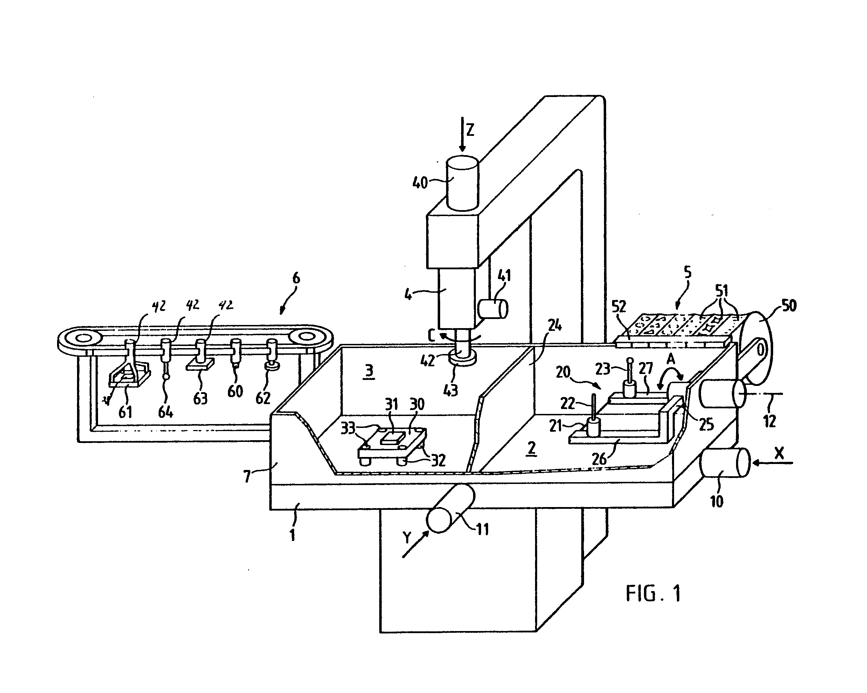

Die Fig. 1 zeigt den Prinzipaufbau einer solchen automatischen Funkenerosionsmaschine. Die Maschine besteht neben den üblichen, hier nicht gezeigten Komponenten, wie z.B. numerische Steuerung, Generator und Dielektrikumsaufbereitung, aus einem in mindestens einer Haupt-Arbeitsebene (XY-Ebene) verfahrbaren Tisch 1, einem ersten Arbeitsraum 2, einem zweiten Arbeitsraum 3, einer Pinole 4, einem Rohelektroden- und/oder Werkstückmagazin 5, einem Elektrodenwechsler 6 und einem Behälter 7 für Dielektrikum. Der Dielektrikumsbehälter 7 ist fest an dem Tisch 1 angebracht und daher mit diesem verfahrbar.

Der Tisch hat Antriebe 10 und 11 für die Verschiebung längs den Hauptachsen (X-Achse und Y-Achse).

In dem ersten Arbeitsraum 2 des Dielektrikumbehälters 7 ist eine Drahtschneidevorrichtung 20 angeordnet. Diese Drahtschneidevorrichtung besitzt die übliche Drahtelektrode 21, wobei der Draht in — nicht dargestellter Weise — in Längsrichtung gespannt abläuft. Dabei kommen die üblichen Elemente einer Drahtschneidemaschine, wie Abwickeldorne, Drahtantrieb, Stromzuführungen, Drahtführungen, Spüldüsen und Aufwickelrollen zum Einsatz. Die entsprechende Funktion dieser Elemente ist prinzipiell nicht von der einer bekannten Drahtschneidemaschine verschieden. Die Drahtschneidevorrichtung 20 ist hier allerdings beweglich gelagert, so daß die Drahtelektrode gegenüber der Haupt-Arbeitsebene (XY-Ebene) gekippt werden kann. Der Draht kann dabei von einer Stellung parallel zur XY-Ebene bis zu einer Stellung senkrecht zur XY-Ebene ausgerichtet werden. Hierzu ist die Drahtschneidevorrichtung 20 in dem dargestellten Ausführungsbeispiel um eine parallel zur XY-Ebene liegende Achse 12 drehbar an einer Wand des Behälters 7 gelagert. Die Drehrichtung ist durch den Pfeil A angedeutet.

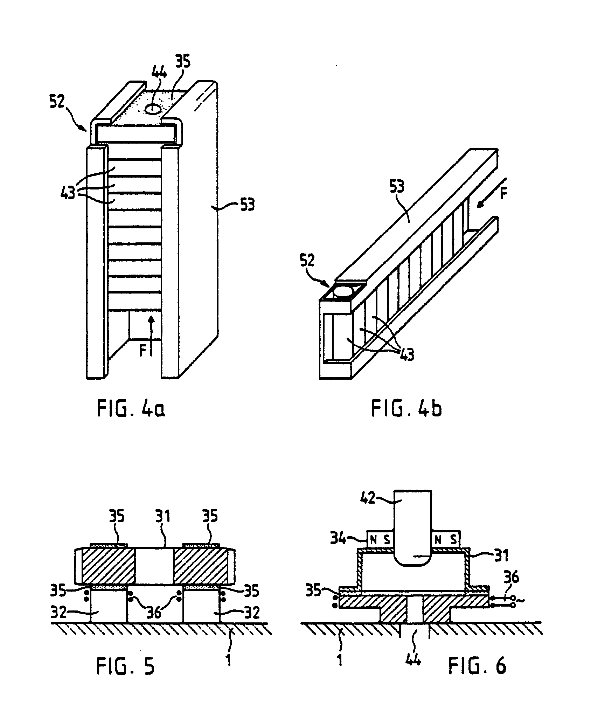

Im dargestellten Ausführungsbeispiel hat die Drahtschneidevorrichtung einen Bügel 25 mit zwei parallel zur XY-Ebene verlaufenden Armen 26 und 27, an deren freien Enden Kerben für die Drahtführungen vorhanden sind. Diese Kerben werden weniger tief als der Drahtelektrodendurchmesser gemacht, um möglichst viele Freiheitsgrade für die Drahtschneidebearbeitung zu realisieren. Die beiden Arme 26 und 27 sind gegenüber der Drehachse 12 hier leicht versetzt angeordnet. Auf den Armen 26 bzw. 27 sind, etwas von der Drahtelektrodenachse zurückversetzt, eine Bohrvorrichtung 22 und ein Meßtaster 23 angebracht, deren Hauptachse hier senkrecht zur Drahtachse verläuft. Die Bohrvorrichtung 22 kann eine Baugruppe sein, wie sie auf Drahtschneidemaschinen üblicherweise verwendet wird, sie kann aber auch viel einfacher aufgebaut sein, indem eine stift- oder röhrchenförmige Roh-Senkelektrode in derselben Weise auf die Bohrvorrichtung 22 gespannt wird, wie später anhand der Fig. 5 beschrieben wird. Die Bohrvorrichtung braucht dabei keinen eigenen Vorschubantrieb, da die Vorschubbewegung auch durch die schon vorhandenen fünf Maschinenachsen (X, Y, Z, C, A) ausgeführt werden kann.

Der erste Arbeitsraum 2 dient also für die Schneiderosionsbearbeitung von «Werkstücken». Diese «Werkstücke» sind — wie weiter unter erläutert wird — an der Pinole 4 aufgespannt. Im konkreten Falle sind diese «Werkstücke» Roh-Senkelektroden 43, die mittels eines Spanndornes 42 an der Pinole 4 befestigt sind. Die Pinole kann durch einen Antrieb 410 Richtung der Z-Achse (senkrecht zur XY-Ebene) verschoben werden und durch einen Antrieb 41 können die Roh-Senkelektrode 43 und ihr Spanndorn 42 um die Z-Achse gedreht werden, was üblicherweise als C-Achse bezeichnet wird.

In der ersten Bearbeitungsstufe wird der Maschinentisch 1 und somit auch der erste Arbeitsraum 2 mit der Drahtschneidevorrichtung 20 so verfahren, daß eine Schneiderosionsbearbeitung der hier das «Werkstück» darstellenden Roh-Senkelektrode erfolgt. Der erste Arbeitsraum 2 ist dabei mit einem wässrigen Dielektrikum gefüllt.

Im dargestellten Ausführungsbeispiel sind der erste und der zweite Arbeitsraum durch eine Trennwand 24 voneinander getrennt.

Der zweite Arbeitsraum 3 ist für die Ausführung des Senkprozesses vorgesehen und ist normalerweise mit einem Kohlenwasserstoffdielektrikum geflutet. Für Spezialanwendungen mit kleinen Elektroden kann es aber auch vorteilhaft sein, auch den Senkprozeß mit wässrigem Dielektrikum zu fahren. In diesem Falle kann die Trennwand 24 entfallen.

Ist die Elektrode 43 für das spätere Senken im ersten Arbeitsraum 2 fertiggestellt, so wird der Tisch 1 — und bei Vorhandsein der Trennwand 24 auch die Pinole — so verfahren, daß der zweite Arbeitsraum 3 unter der Pinole liegt. Im zweiten Arbeitsraum 3 sind mehrere tischseitige Spanndorne 32 vorgesehen, wovon in Fig. 1 nur drei gezeichnet sind. Diese Spanndorne 32 dienen zum Aufspannen von Werkstückpaletten 30 oder direkt zum Spannen von speziell vorbereiteten Werkstücken 31. Die Werkstückpaletten weisen auf der Pinolenseite auf der Tischseite speziell vorbereitete Spannflächen auf.

Wie erwähnt kann die Pinole 4 in Z-Richtung verfahren weren, und sie weist zusätzlich eine Rotationsachse C auf, welche den Spanndorn 42 mit der Elektrode 43 drehen kann. Dabei sind Schleifringe und Spülungsdurchführungen vorgesehen, welche den Verdrehwinkel nicht limitieren.

Hinter dem Arbeitsraum 2 sind hier mehrere Rohelektroden- und/oder Werkstückmagazine 5 angeordnet, wo z.B. (Roh-) Elektrodenbänder 51 auf Spulen 50 aufgewickelt sind oder Einzel(roh-)elektroden 43 in einem weiter unten erläuterten Stapelmagazin 53 abgelegt sind. Übergabevorrichtungen 52 sichern eine einwandfreie Entnahme der (Roh-) Elektroden aus den Magazinen. In gleichartigen Magazinen können auch kleinere Rohwerkstücke wie beispielsweise Düsen, Mikroteile und Schneidplatten für Zerspannungswerkzeuge gespeichert werden.

Der Tisch 1 läßt sich dabei so weit verfahren, daß der Spanndorn 42 zur jeweils gewüschten Entnahmestelle des Magazins gelangt.

Neben dem zweiten Arbeitsraum 3 ist hier ein Elektrodenwechsler 6 von prinzipiell bekannter Bauart vorgesehen, welcher sich ebenfalls durch Bewegung des Tisches 1 verschieben läßt. Dieser Elektrodenwechsler 6 enthält beispielsweise leere Spanndorne 60, Werkstückpaletten 61, schon gebrauchte aber noch verwendbare Elektroden 62, fertig bearbeitete Spezialelektroden 63 und ggf. auch Meßtaster 64. Alle diese Teile haben einheitliche (vorzugsweise genormte) Anschlüsse.

Ein typischer Bearbeitungszyklus läuft wie folgt ab:

1. Eine mit dem Werkstück 31 beladene Werkstückpalette 61 wird dem Elektrodenwechsler 6 entnommen in üblicher Weise an der Pinole 4 befestigt;

2. es wird der erste Arbeitsraum 2 angefahren und mit dem in eine günstige Lage gedrehten Meßtaster 23 ein eventueller Positionierungsfehler gemessen;

3. es wird der zweite Arbeitsraum angefahren; die Palette 61 wird über die Achsen X, Y, Z, und C so ausgerichtet, daß der evtl. vorhandene Positionierungsfehler kompensiert wird;

4. die Palette 61 wird mit den tischseitigen Spanndornen 32 durch Weichlöten verbunden, der magnetisch mit der Palette verbundene pinolenseitige Spanndorn wird von der Palette gelöst und im Elektrodenwechsler 6 zwischengespeichert;

5. dem Elektrodenwechsler 6 wird ein geeigneter, leerer Spanndorn 60 entnommen, oder anschließend beim Rohelektroden- und/oder Werkstückmagazin 5 mit einer ausgewählten Roh-Senkelektrode 43 beschickt und mittels Weichlöten verbunden;

6. die Roh-Senkelektrode wird mit Hilfe der Drahtschneidevorrichtung 20 auf die gewünschten Endmaße bearbeitet;

7. im zweiten Arbeitsraum 3 wird die gewünschte Form des Werkstückes 31 durch Translation und/oder Rotation über die Achsen X, Y, C, und Z durch Senkerosionsbearbeitung erzeugt;

8. ggf. mehrfache Wiederholung der Schritte 5 bis 7. Verschlissene Elektroden 43 werden jeweils in einen Abfallbehälter — nicht dargestellt — abgeworfen oder, wenn sie noch verwendbar sind, im Elektrodenwechsler 6 zwischengespeichert; nicht mehr verwendete Spanndorne 60 werden wieder im Elektrodenwechsler 6 gespeichert;

9. in umgekehrtem Ablauf wird die Palette 61 mit dem fertig bearbeiteten Werkstück 31 wieder in den Elektrodenwechsler gebracht;

10. ein neuer, eventuell verschiedener Arbeitszyklus wird automatisch gestartet.

Aus diesem Beispiel erkennt man deutlich, daß außer der Bereitstellung von geeignetem Rohmaterial, Erstellung des Bearbeitungsprogrammes und Entnahme der fertigen Werkstücke keine Bedienungstätigkeiten durch Personen anfallen. Viele Zyklen können über ein nur einmalig zu erstellendes, sog. Dienstprogramm sogar selbsttätig generiert werden. Solche Dienstprogramme beinhalten Tabellen mit Erfahrungswerten, Berechnungsalgorithmen für Parameter und Tabellen mit Koordinatenwerten von Elektrodenwechsler, Aufspannposition, Meßposition und dergleichen. Die Erstellung dieser Dienstprogramme ist zwar recht aufwendig, jedoch lohnend, da sie nachher jedem Anwender der Anlage zugute kommt.

Aus obiger Beschreibung erkennt man deutlich die Wichtigkeit einer präzisen Aufnahme sowohl der Roh-Senkelektrode als auch des Werkstückes. Mit traditionellen Klemmsystemen ist diese Aufgabe nur sehr schlecht zu lösen, da das Spanngut allein schon im Gewicht von einigen Gramm bis zu einigen 10-Kilogramm variieren kann. Auch muß die Spannoperation hochpräzis in der angefahrenen Position erfolgen und darf keine Abweichung durch Klemmbewegung unterworfen sein. Die Erfinding ersetzt das unpräzise Spannen durch Weichlöten. Hierzu sind der jeweilige Spanndorn (z.B. 32 und 42) sowie ggf. die Roh-Senkelektrode, das Werkstück oder die Palette mit einer Beschichtung 35 aus einer Weichlotlegierung versehen. Die Beschichtungsdicke ermöglicht dabei Korrekturen in allen Raumachsen bis zu einigen 100 µm. Zum Aufspannen wird der Spanndorn beheizt, bis das Weichlot schmilzt, wobei hierbei die zu verspannenden Teile noch fest in ihrer Position gehalten sind. Nach Abkühlung des Weichlotes ist das gewünschte Teil exakt aufgespannt und kann sich später nicht mehr verschieben.

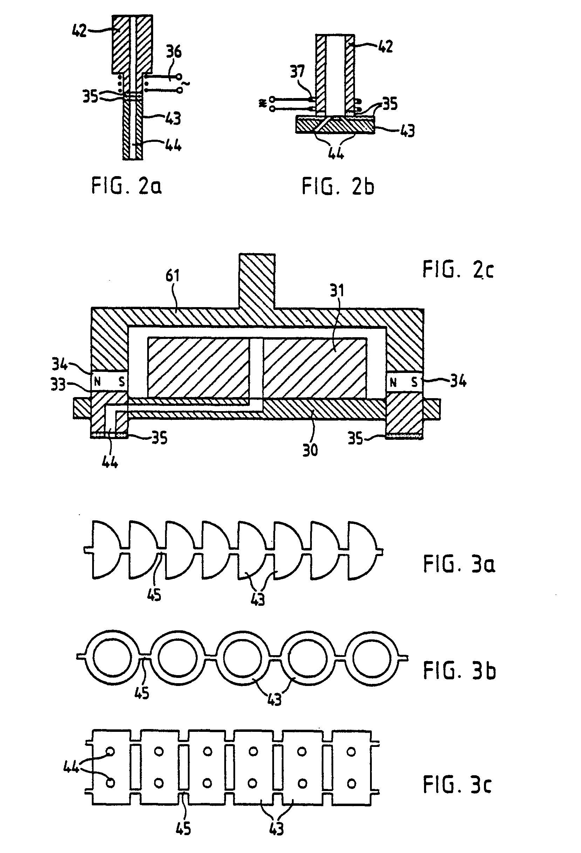

Ein Beispiel hierfür zeigt Fig. 2. Fig. 2a zeigt eine rohrförmige Senkelektrode 43 mit einer Spülbohrung 44, welche auf einen Spanndorn 42 gesetzt ist. Letzterer ist bereits fest in der Pinole 4 eingespannt. Die gegenüberliegenden Enden des Spanndornes 42 und der Elektrode 43 sind jeweils mit einer Beschichtung 35 und Weichlotlegierung versehen, welche hier mit einer Widerstandsheizung 36 erwärmt und damit verschmolzen werden. Zum späteren Lösen kann die Weichlotlegierung in gleicher Weise wieder geschmolzen werden. Für diesen Anwendungszweck eignen sich Weichlotmaterialien mit Schmelztemperaturen zwischen 60 und 200°C. In der Elektroindustrie verwendete Weichlote und durch Siebdrucktechnik aufzubringende Weichlotpasten können diese Anforderungen gut erfüllen. Die Widerstandsheizung 36 ist am unteren, freien Ende des Spanndornes 42 angebracht.

Ein ähnliches Beispiel ist in Fig. 2b gezeigt, jedoch mit dem Unterscheid, daß der Spanndorn 42 und die hier plattenförmige Roh-Senkelektrode 43 mit den Beschichtungen 35 durch eine Hochfrequenzspule 37 (Induktionsspule) erwärmt werden. Die dort erkennbaren schrägen Spülbohrungen wurden mit der Bohrvorrichtung 22 erodiert. In beiden Beispielen der Fig. 2a und 2b kann die Heizleistungen vom Erosionsgenerator aufgebracht werden. Im ersten Fall ist nur ein Anschluß der Widerstandsheizung 36 mit dem Spanndorn 42 zu verbinden und das andere Ende mit einem Stromkontakt, welcher in der Spannposition auf das Tischpotential verbunden wird. Zum Heizen ist dann nur der Erosionsgenerator bei geeigneten Parametern während einiger Sekunden einzuschalten. Die Abkühlzeit kann durch Spülflüssigkeitsdurchfluß in den Spülbohrungen 44 stark verkürzt werden.

Fig. 2c zeigt die Anwendung dieser Spannmethode bei einer Werkstückpalette 30, auf welcher das Werkstück 31 festgehalten ist. Das Werkstück 31 und die Werkstückpalette 30 besitzen ebenfalls Spülbohrungen 44. An der tischseitigen Spannfläche weist die Werkstückpalette 30 ebenfalls Beschichtungen 35 aus Weichlotlegierung auf.

Der Spülkanal 44 geht auch durch diese Beschichtung 35 hindurch. Im Unterschied zu den vorhergehenden Beispielen weist der pinolenseitige Spanndorn 42', der hier eine Glockenform mit abstehendem Zapfen hat, Dauermagnete 34 auf, welche auf den hier ferromagnetischen Spannflächen 33 der Werkstückpalette 30 haften. Da die tischseitigen Lötverbindungen der Beschichtungen 35 nach der Abkühlung besser haften als die Dauermagnete 34, genügt zur Trennung der oberen Verbindung die bloße Krafteinwirkung des Z-Achsenantriebes. Umgekehrt ist zum Entfernen der Werkstückspalette die Haftkraft der Dauermagneten 34 größer als die des aufgeschmolzenen Lotes. In analoger Weise zur Beheizung der pinolenseitigen Spanndorne 42 haben auch die tischseitigen Spanndorne 32 eine entsprechende Widerstands- oder Induktionsheizung.

Die Fig. 3a bis 3c zeigen Roh-Senkelektroden 43, welche durch Stanz- oder Fräsbearbeitung in Automaten unter Belassung eines Verbindungssteges 45 in Bandform gebracht werden. So ist es möglich, mehrere tausend Roh-Senkelektroden 43 auf dem Spulenmagazin 50 (Fig. 1) aufzuwickeln. Bei der Entnahme einer Roh-Senkelektrode 43 wird dieser Steg 45 durch eine Stanz- oder Schervorrichtung entfernt. Auch die Roh-Senkelektroden weisen spannseitige Schmelzbeschichtungen 35 auf und können auch vorgefertigte Spülbohrungen haben.

Statt eines Spulenmagazines kann auch ein Stapelmagazin entsprechend den Fig. 4a und 4b verwendet werden. Fig. 4a zeigt ein vertikales Stapelmagazin 53 mit gestapelten Roh-Senkelektroden 43. Die Roh-Senkelektroden werden durch Federkraft F nach oben gegen eine Übergabevorrichtung 52 gedrückt. Bei diesem Magazin sind hierfür lediglich zwei Wandteile um 90° nach innen gebogen und stellen damit einen Anschlag für die Roh-Senkelektroden dar. An der Stirnfläche der obersten Roh-Senkelektrode weist das Stapelmagazin 53 eine Öffnung auf, so daß jeweils die oberste Roh-Senkelektrode horizontal ausgeschoben werden kann. Die Oberseite der Roh-Senkelektroden weist ebenfalls eine Beschichtung 35 aus Weichlotlegierung auf. Bei der Entnahme wird diese Beschichtung 35 mit der Beschichtung des Spanndornes 42 verschmolzen. Anschließend wird durch eine Bewegung in Y-Achsenrichtung die Roh-Senkelektrode nach vorne oder hinten entnommen. Nach der Entnahme springt die nächste Roh-Senkelektrode 43 in die Entnahmeposition.

Fig. 4b zeigt ein horizontales Stapelmagazin 53, das in ähnlicher Weise funktioniert. Hier werden lediglich die rohrförmigen Roh-Senkelektroden 43 nach oben entnommen.

Fig. 5 zeigt die Befestigung eines Werkstückes 31 am Tisch ohne Verwendung einer Palette. Dieses Werkstück 31, das hier beispielsweise ein Zahnrad sein kann, weist beidseitig Beschichtungen 35 auf, wobei die unteren Beschichtungen 35 mit den tischseitigen Spanndornen 32 verschmolzen werden. Die Heizwicklungen 36 der tischseitigen Spanndorne 32 können hier ebenfalls über einen Schalter an einen Erosionsgenerator angeschlossen werden. Das Rohwerkstück 31 wird vorteilhafterweise in Siebdrucktechnik mit den Beschichtungen 35 versehen und in Stapelmagazinen 53 magaziniert. Zur Entnahme dieser Werkstücke wird der pinolenseitige Spanndorn 42 über die Beschichtung 35 an dem Werkstück 31 angelötet, wobei die Lötverbindung nach der tischseitigen Lötverbindung wieder gelöst wird.

Fig. 6 zeigt ein kappenförmiges Rohwerkstück 31, welches ferromagnetisch ist und eine Zentrierbohrung aufweist. Es braucht dadurch nur tischseitig mit der Beschichtung 35 versehen werden. Pinolenseitig genügt ein Spanndorn 42 mit Zentriervorsatz und einem oder mehreren Dauermagneten 34. Der Spannvorgang ist derselbe wie im Zusammenhang mit Fig. 2c beschrieben. Der tischseitige Spanndorn ist hier zur Anpassung an die Form des Werkstückes pilzförmig ausgebildet und enthält außer der Heizwicklung 36 auch eine Spülbohrung, welche über einen Spülkanal 44 im Tisch 1 gespeist wird.

Es sind prinzipiell zwei Arten dieser automatischen Funkenerosionsmaschinen machbar, die universelle, mit genormten Roh-Senkelektroden 43, Spanndornen 42 und Magazinen 53 und die spezielle Produktionsmaschine, welche nur einen oder wenige Typen von Werkstücken produziert. Im zweiten Fall lohnt es sich, Aufwand für die Optimierung der Komponenten zu treiben.

**Patentanspüche**

1. Funkenerosionsverfahren, bei dem eine Roh-Elektrode (43) mittels Funkenerosion bearbeitet wird und anschließend ohne Umspannen der Elektrode (43) ein Werkstück (31) von der Elektrode (43) funkenerosiv bearbeitet wird, dadurch gekennzeichnet,

a) daß die durch umformende, schneidende oder zerspanende Bearbeitung außerhalb der Maschine vorbereiteten Roh-Elektroden (43) in einem Roh-elektroden- und/oder Werkstückmagazin (5) an der Maschine magaziniert werden,

b) daß die magazinierten Rohelektroden (43) an einem mit einer Pinole (4) der Maschine verbundenen Spanndorn (42) befestigt werden, und

c) anschließend mittels Draht-/Schneiderosion bearbeitet werden.

2. Funkenerosionsverfahren nach Anspruch 1, dadurch gekennzeichnet, daß die Rohelektrode (43) in einem ersten Arbeitsraum (2) des Dielektrikumbehälters (7) bearbeitet und dann der Maschinentisch (1) so verfahren wird, daß das Werkstück (31) in einem zweiten Arbeitsraum (3) bearbeitet wird.

3. Funkenerosionsverfahren nach Anspruch 1 oder 2, dadurch gekennzeichnet, daß beim Schneiderodieren der Rohelektrode (43) diese in bezug auf eine Hauptarbeitsebene (X-Y-Ebene) stillsteht, während die Drahtelektrode (21) in der Hauptarbeitsebene verschoben wird.

4. Funkenerosionsverfahren nach Anspruch 3, dadurch gekennzeichnet, daß die Drahtelektrode (21) gegenüber der Hauptarbeitsebene (X-Y-Ebene) gekippt wird und zwar auch während des Schneiderodierens.

5. Funkenerosionsverfahren nach einem der Ansprüche 1 bis 4, dadurch gekennzeichnet, daß die Rohelektrode (43) mittels Weichlöten eingespannt und nach Erwärmen des Lotes wieder ausgespannt wird.

6. Funkenerosionsverfahren nach einem der Ansprüche 1 bis 5, dadurch gekennzeichnet, daß das Werkstück (43) bzw. eine das Werkstück haltende Werkstückpalette (30) mittels Weichlöten am Maschinentisch (1) befestigt wird und nach Erwärmen des Lotes wieder entfernt wird.

7. Funkenerosionsverfahren nach Anspruch 1, dadurch gekennzeichnet, daß aus platten- oder bandförmigem Material bestehende Rohelektroden (43) so bearbeitet werden, daß die einzelnen Rohelektroden (43) durch mindestens einen Verbindungssteg (45) miteinander verbunden bleiben und daß das dadurch entstehende Rohelektrodenband (51) auf ein Spulenmagazin aufgewickelt wird, wobei bei Entnahme einer Rohelektrode (43) aus diesem Spulmagazin der Verbindungssteg (45) durchtrennt wird.

8. Funkenerosionsmaschine mit einem mindestens in einer Ebene (X-Y-Ebene) verschiebbaren Maschinentisch (1), an welchem ein Behälter (7) für Dielektrikum befestigt ist, mit einer Pinole (4), die eine Spanneinrichtung für eine Senkelektrode (43) aufweist, wobei die Pinole (4) mindestens einen Freiheitsgrad der Bewegung (Z-Achse) aufweist, dadurch gekennzeichnet, daß eine mit dem Maschinentisch (1) und dem Behälter (7) bewegbare elektroerosive Drahtschneideeinrichtung (20) vorhanden ist, welche so angeordnet ist, daß ihre Drahtelektrode gegenüber der Haupt-Arbeitsebene (X-Y-Ebene) kippbar ist.

9. Funkenerosionsmaschine nach Anspruch 8, dadurch gekennzeichnet, daß der Behälter (7) durch eine Trennwand (24) in zwei Arbeitsräume (2, 3) unterteilt ist und daß die Drahtschneideeinrichtung (20) in einem Arbeitsraum (2) angeordnet ist.

10. Funkenerosionsmaschine nach Anspruch 8 oder 9, dadurch gekennzeichnet, daß die Drahtschneideeinrichtung (20) um eine parallel zur Haupt-Arbeitsebene (X-Y-Ebene) liegende Achse (12) schwenkbar gelagert ist.

11. Funkenerosionsmaschine nach Anspruch 10, dadurch gekennzeichnet, daß die Drahtschneideeinrichtung (20) an einer Seitenwand des Behälters (7) gelagert ist.

12. Funkenerosionsmaschine nach Anspruch 11, dadurch gekennzeichnet, daß die Drahtschneidevorrichtung (20) einen Bügel (25) aufweist, zwischen dessen Armen (26, 27) die Drahtelektrode (21) verläuft und daß die Arme (26, 27) des Bügels (25) gegenüber der Achse (12) versetzt angeordnet sind.

13. Funkenerosionsmaschine nach einem oder mehreren der Ansprüche 8 bis 13, dadurch gekennzeichnet, daß an dem Bügel (25) eine Bohrvorrichtung (22) in Form einer Elektrode angebracht ist.

14. Funkenerosionsmaschine nach einem oder mehreren der Ansprüche 8 bis 13, dadurch gekennzeichnet, daß an dem Bügel (25) mindestens ein Meßtaster (23) angeordnet ist und zwar so, daß er durch Drehung des Bügels um die Achse (12) quer zu seiner Längsrichtung gedreht werden kann.

15. Funkenerosionsmaschine nach einem oder mehreren der Ansprüche 8 bis 14, dadurch gekennzeichnet, daß an dem Behälter (7) ein mit diesem verfahrbarer Elektrodenwechsler (6) angebracht ist.

16. Funkenerosionsmaschine nach einem oder mehreren der Ansprüche 8 bis 15, dadurch gekennzeichnet, daß an dem Behälter (7) ein mit diesem verfahrbares (Roh-) Elektroden- und/oder Werkstückmagazin (5) angeordnet ist.

17. Funkenerosionsmaschine nach Anspruch 15 oder 16, dadurch gekennzeichnet, daß an dem Elektrodenwechsler (6) das zu bearbeitende Werkstück tragende Werkstückpaletten (61) mit Spanndorn vorhanden sind.

18. Funkenerosionsmaschine nach einem oder mehreren der Ansprüche 8 bis 17, dadurch gekennzeichnet, daß die Spanneinrichtung an der Pinole (4) eine Heizeinrichtung (36, 37) aufweist und daß das freie Ende der Pinole und/oder das freie obere Ende des Spanndornes der Werkzeugpalette, der (Roh-) Elektroden oder von zusätzlichen Meßtastern mit weichlötfähigem Material beschichtet sind.

19. Funkenerosionsmaschine nach Anspruch 18, dadurch gekennzeichnet, daß die Heizeinrichtung eine elektrische Widerstandsheizung (36) ist.

20. Funkenerosionsmaschine nach Anspruch 18, dadurch gekennzeichnet, daß die Heizeinrichtung eine Induktionsspule (37) ist.

21. Funkenerosionsmaschine nach einem oder mehreren der Ansprüche 8 bis 20, insbesondere nach Anspruch 16, dadurch gekennzeichnet, daß am Werkzeugtisch (1) im zweiten Arbeitsraum (3) ein oder mehrere tischseitige Spanndorne (32) vorgesehen sind, welche an ihrem oberen, freien Ende eine Beschichtung (35) aus weichlötfähigem Material aufweisen, wobei diese Spanndorne (32) jeweils eine eigene Heizeinrichtung (36 bzw. 37) aufweisen.

22. Funkenerosionsmaschine nach Anspruch 21, dadurch gekennzeichnet, daß der pinolenseitige Spanndorn und/oder ein Spanndorn (61) mit Werkstückpalette an seinem freien Ende einen Dauermagneten (34) aufweist.

23. Funkenerosionsmaschine nach einem oder mehreren der Ansprüche 8 bis 22, dadurch gekennzeichnet, daß die Pinole eine Dreheinrichtung aufweist, mit der der Spanndorn um seine eigene Achse gedreht werden kann.

24. Funkenerosionsmaschine nach einem der Ansprüche 8 bis 23, dadurch gekennzeichnet, daß der pinolenseitige Spanndorn (42), die (Roh-) Elektrode (43) und ggf. auch das Werkstück (31) und die Werkstückpalette (30) eine Spülbohrung (44) aufweisen.

## Claims

1. Electroerosive machining method, wherein an unfinished electrode (43) is worked by electroerosion and subsequently, without resetting the electrode (43), a workpiece (31) is electroerosively worked by the electrode (43), characterised in that:

a) the unfinished electrodes (43) prepared off machine by shaping, cutting or stock removal are stored on the machine in a magazine (5) for unfinised electrodes and/or workpieces,

b) the stored unfinished electrodes (43) are attached to a mandrel (42) connected to the machine by means of a spindel sleeve (4), and

c) subsequently are worked by means of wire erosion/cutting erosion.

2. Electroerosive machining method according to claim 1, characterised in that the unfinished electrode (43) is worked in a first working area (2) of the dielectric holder (7) and then the machine table (1) is moved so that the workpiece (31) is worked in a second working area (3).

3. Electroerosive machining method according to claim 1 or 2, characterised in that during cutting erosion of the unfinished electrode (43) the latter is stationary in relation to a principal working plane (X-Y plane), while the wire electrode (21) is displaced in the principal working plane.

4. Electroerosive machining method according to claim 3, characterised in that the wire electrode (21) is tilted with respect to the principal working plane (X-Y plane), and also during cutting erosion.

5. Electroerosive machining method according to any one of claims 1 to 4, characterised in that the unfinished electrode (43) is held by means of soft-soldering and released again once the solder heats up.

6. Electroerosive machining method according to any one of claims 1 to 5, characterised in that the workpiece (43), or a workpiece pallet (30) holding the workpiece, is attached by means of soft-soldering to the machine table (1) and removed again once the solder heats up.

7. Electroerosive machining method according to claim 1, characterised in that unfinished electrodes (43) made from sheets or ribbons of material are worked such that the individual unfinished electrodes (43) remain connected with one another by at least one connecting web (45) and that the resulting ribbon (51) of unfinished electrodes is wound onto a coil magazine, the connecting web (45) being severed whenever an unfinished electrode (43) is removed from said coil magazine.

8. Electroerosive machining apparatus having a machine table (1) which can be moved at least in one plane (X-Y-plane), a holder (7) for dielectric being attached to said machine table (1), and having a spindle sleeve (4) with a clamping mechanism for a lowerable electrode (43), said sleeve (4) having at least one degree of freedom of movement (Z axis), characterised in that an electroerosive wire cutting device (20) is provided which can be moved with the machine table (1) and the holder (7), said device (20) being disposed such that its wire electrode is tiltable with respect to the principal working plane (X-Y plane).

9. Electroerosive machining apparatus according to claim 8, characterised in that a partition (24) divides the holder (7) into two working areas (2, 3) and the wire cutting device (20) is disposed in one working area (2).

10. Electroerosive machining apparatus according to claim 8 or 9, characterised in that the wire cutting device (20) is swivel-mounted about an axis (12) which is parallel to the principal working plane (X-Y plane).

11. Electroerosive machining apparatus according to claim 10, characterised in that the wire cutting device (20) is mounted on a side wall of the holder (7).

12. Electroerosive machining apparatus according to claim 11, characterised in that the wire cutting device (20) has a bracket (25), between the arms (26, 27) of which the wire elctrode (21) extends, and that the arms (26, 27) of the bracket (25) are offset with respect to the axis (12).

13. Electroerosive machining apparatus according to one or more of claims 8 to 13, characterised in that a tapping device (22) in the form of an electrode is mounted on the bracket (25).

14. Electroerosive machining apparatus according to one or more of claims 8 to 13, characterised in that at least one probe (23) is disposed on the bracket (25), that by rotation of the bracket about the axis (12) said probe (23) can be rotated at right angles to its longitudinal direction.

15. Electroerosive machining apparatus coording to one or more of claims 8 to 14, characterised in that an electrode changer (6) is mounted on the holder (7) and can be moved together therewith.

16. Electroerosive machining apparatus according to one or more of claims 8 to 15, characterised in that an (unfinished) electrode magazine and/or workpiece magazine (5) is disposed on the holder (7) and can be moved together therewith.

17. Electroerosive machining apparatus according to claim 15 or 16, characterised in that workpiece pallets (61) supporting the workpiece to be worked are provided, along with mandrel, on the electrode changer (6).

18. Electroerosive machining apparatus according to one or more of claims 8 to 17, characterised in that the holding device on the sleeve (4) has a heating device (36, 37) and that the free end of the sleeve and/or the free upper end of the mandrel of the workpiece pallet, of the (unfinished) electrodes or of additional probes, are coated with soft-solderable material.

19. Electroerosive machining apparatus according to claim 18, characterised in that the heating device is an electric resistance heating unit (36).

20. Electroerosive machining apparatus according to claim 18, characterised in that the heating device is an induction coil (37).

21. Electroerosive machining apparatus according to one or more of claims 8 to 20, more particularly claim 16, characterised in that on the side facing the table there are provided on the machine table (1) in the second working area (3) one or more mandrels (32), which at their upper, free end have a coating (35) of soft-solderable material, said mandrels (32) each having its own heating device (36 or 37).

22. Electroerosive machining apparatus according to claim 21, characterised in that the mandrel on the side facing the sleeve and/or a mandrel (61) with workpiece pallet has a permanent magnet (34) at its free end.

23. Electroerosive machining apparatus according to one or more of claims 8 to 22, characterised in that the sleeve has a rotation arrangement, by means of which the mandrel can be rotated about its own axis.

24. Electroerosive machining apparatus according to any one of claims 8 to 23, characterised in that the mandrel (42) on the side facing the sleeve, the (unfinished) electrode (43), and if appropriate also the workpiece (31) and the workpiece pallet (30), are provided with a rinsing bore (44).

## Revendications

1. Procédé d'étincelage, dans lequel une électrode brute (43) est usinée par étincelage, puis, sans que l'électrode (43) cesse d'être fixée, une pièce à usiner (31) est usinée par étincelage au moyen de l'électrode (43), caractérisé par le fait que:

a) les électrodes brutes (43) qui sont été préparées par usinage avec formage, découpe ou enlèvement de copeaux en dehors de la machine, sont stockées près de la machine dans un magasin (5) pour électrodes brutes et/ou pour pièces à usiner,

b) les électrodes brutes (43) stockées sont fixées sur un support de fixation (42) relié au porte-outil (4) de la machine, et

c) qu'elles sont ensuite usinées par érosion de coupe au fil.

2. Procédé d'étincelage selon la revendication 1, caractérisé par le fait que l'électrode brute (43) est usinée dans un premier espace de travail (2) de la cuve de diélectrique (7) et qu'ensuite le banc ou la table (1) de la machine est déplacé de façon telle que la pièce à usiner (31) est usinée dans un deuxième espace de travail (3).

3. Procédé d'étincelage selon la revendication 1 ou 2, caractérisé par le fait que lors de la découpe par étincelage de l'électrode brute (43) celle-ci est au repos par rapport à un plan de travail principal (plan X-Y), tandis que l'électrode (21) filiform se déplace dans le plan de travail principal.

4. Procédé d'étincelage selon la revendication 3, caractérisé par le fait que l'électrode (21) filiform, est inclinée par rapport au plan de travail principal (plan X-Y) est ceci également pendant la découpe par étincelage.

5. Procédé d'étincelage selon une des revendications 1 à 4, caractérisé par le fait que l'électrode brute (43) est fixée au moyen d'une opération de soudure à la brasage tendre et, est à nouveau détachée après chauffage de la brasure.

6. Procédé d'étincelage selon une des revendications 1 à 5, caractérisé par le fait que la pièce à usiner (31), ou une palette pour pièce à usiner portant la pièce à usiner est respectivement fixée au moyen d'une opération de brasage à la brasure tendre sur le banc ou la table (1) de la machine et est à nouveau détachée après chauffage de la brasure.

7. Procédé d'étincelage selon la revendication 1, caractérisé par le fait que des électrodes brutes (43) constituées par un matériau sous forme de plaques ou sous forme de bandes usinées de façon telle que les électrodes brutes (43) individuelles restent reliées entre elles au moins par une barrette de liaison (45) et que la bande (51) d'électrodes brutes qui en résulte est enroulée sur un magasin en forme de bobine, la barrette de liaison (45) étant séparée par coupe lors du prélèvement d'une électrode brute (43), hors de ce magasin en forme de bobine.

8. Machine à étincelage comportant un banc ou une table (1) de machine susceptible d'être déplacé dans au moins un plan (plan X-Y), sur lequel est fixée une cuve (7) pour diélectrique, comportant un porte-outil (4) qui présente un dispositif de fixation destiné à une électrode de fonçage (43), le porte-outil (4) présentant au moins un degré de liberté de déplacement (axe Z), caractérisé par le fait qu'il existe un dispositif (20) de découpe au fil par électro-érosion susceptible de se déplacer avec le banc ou la table (1) de la machine et la cuve (7), lequel est disposé de façon telle que son électrode filiform peut être inclinée par rapport au plan de travail principal (plan X-Y).

9. Machine à étincelage selon la revendication 8, caratérisée par le fait que la cuve (7) est subdivisée par une cloison (24) en deux espaces de travail (2, 3) et que le dispositif de découpe (20) au fil est disposé dans un espace de travail (2).

10. Machine à étincelage selon la revendication 8 ou 9, caractérisée par le fait que le dispositif de découpe (20) au fil est monté de façon pivotante sur un axe (12) situé parallèlement au plan de travail principal (plan X-Y).

11. Machine à étincelage selon la revendication 10, caractérisée par le fait que le dispositif de découpe (20) au fil est monté sur une paroi latérale de la cuve (7).

12. Machine à étincelage selon la revendication 11, caractérisée par le fait que le dispositif de découpe (20) au fil présente un étrier (25) entre les branches (26, 27) duquel s'étend l'électrode (21) filiforme et que les branches (26, 27) de l'étrier (25) sont disposées de façon décalée par rapport à l'axe (12).

13. Machine à étincelage selon une ou plusieurs des revendications 8 à 12, caractérisée par le fait qu'un dispositif de perçage (22) est monté sur l'étrier (25) sous forme d'une électrode.

14. Machine à étincelage selon une ou plusieurs des revendications 8 à 13, caractérisée par le fait qu'au moins un palpeur de mesure (23) est disposé sur l'étrier (25) et ceci de façon telle qu'il puisse être tourné transversalement par rapport à son sens longitudinal par rotation de l'étrier sur l'axe (12).

15. Machine à étincelage selon une ou plusieurs des revendications 8 à 14, caractérisée par le fait qu'un dispositif de remplacement (6) d'électrodes est disposé sur la cuve (7) en étant susceptible d'être déplacé avec celle-ci.

16. Machine à étincelage selon une ou plusieurs des revendications 8 à 15, caractérisée par le fait qu'un magasin (5) à électrodes (brutes) et/ou à pièces à usiner est disposé sur la cuve (7) en étant susceptible d'être déplacé avec celle-ci.

17 Machine à étincelage selon la revendication 15 ou 16, caractérisée par le fait que sur le dispositif (6) de remplacement d'électrodes, les palettes (61) pour pièces à usiner comportant un support de fixation.

18. Machine à étincelage selon une ou plusieurs des revendications 8 à 17, caractérisée par le fait que le dispositif de fixation situé sur le porte-outil (4) présente un dispositif de chauffage (36, 37), et que l'extrémité libre du porte-outil et/ou l'extrémité supérieure libre du support de fixation des palettes porte-pièces à usiner, des électrodes brutes ou de palpeurs de mesure supplémentaires, sont munies d'une couche de matériau susceptible de réaliser une brasure tendre.

19. Machine à étincelage selon la revendication 18, caractérisée par le fait que le dispositif de chauffage est un dispositif de chauffage (36) à résistance électrique.

20. Machine à étincelage selon la revendication 18, caractérisé par le fait que le dispositif de chauffage est une bobine d'induction.

21. Machine à étincelage selon une ou plusieurs des revendications 8 à 20 en particulier selon la revendication 16, caractérisée par le fait qu'un ou plusieurs supports de fixation (32) sont prévus sur le banc ou la table (1) d'usinage dans un second espace de travail (3), lesquels présentent une couche (35) de matériau susceptible de constituer une brasure tendre sur ses extrémités libres supérieures, ces supports de fixation (32) présentant respectivement dans chaque cas un dispositif de chauffage propre (36, 37).

22. Machine à étincelage selon la revendication 21, caractérisée par le fait que le support de fixation situé du côté du porte-outil, et/ou un support de fixation (61) comportant une palette pour pièce à usiner, présente à son extrémité libre un aimant permanent (34).

23. Machine à étincelage selon une ou plusieurs des revendications 8 à 22, caractérisée par le fait que le porte-outil présente un dispositif de rotation, au moyen duquel le support de fixation peut être tourné sur son propre axe.

24. Machine à étincelage selon une des revendications 8 à 23, caractérisée par le fait que le support de fixation (42) situé du côté du porte-outil, l'électrode (brute) (43) et le cas échéant également aussi la pièce à usiner (31) ainsi que la palette (30) pour pièce usiner présentent un trou de balayage.

FIG. 1

FIG. 2a

FIG. 2b

FIG. 2c

FIG. 3a

FIG. 3b

FIG. 3c

FIG. 4a

FIG. 4b

FIG. 5

FIG. 6